# EUROPEAN PATENT APPLICATION

(11) **EP 0 666 231 A1**
(43) Date of publication of application: **09.08.1995**
(21) Application number: 95300636.8
(22) Date of filing: 01.02.1995
(51) Int. Cl.: B65G 51/26

(54) **Pneumatic conveyor**

(30) Priority: 07.02.1994 GB 9402300
(71) Applicant: AIR TUBE CONVEYORS LIMITED, West Midlands B69 4HE (GB)
(72) Inventor: Henderson, Fraser, Shirley, Solihull, B90 3LE (GB); Clifford, Norman Samuel, Darlaston, West Midlands, WS10 8XY (GB)
(74) Representative: Carpenter, David

(57) **Abstract**

A send/receive station for a pneumatic conveyor is disclosed in which the closure member (13) of the station has associated therewith an electrically releasable latching mechanism (14). The closure member (13) and latching mechanism (14) are arranged so that on closing the station, the latching mechanism (14) becomes locked so that movement of the closure member (13) away from its closed position can only be effected after the latching mechanism (14) is released by applying an appropriate electrical signal thereto.

## Description

This invention relates to a carrier sending and/or receiving station for a pneumatic conveyor, the conveyor being of the kind in which carriers are transferred from one station to another along interconnecting tubing by an air flow.

Such conveyors are well known, and send/receive stations for such conveyors can take a number of different forms. A usual requirement of most send/receive stations is that there is an aperture in the wall of the tube to permit insertion or removal of a carrier, and a closure device for closing the aperture to allow the carrier to be transported by the air flow along the tube. Such conveyors may be used in a wide variety of environments some of which involve the conveying of security sensitive items. For example, in a retail and/or banking environment the security sensitive items may be bank notes and the like whereas in an office environment the items may be confidential documents. In a hospital or pharmacy environment the items may be drugs the use of which is restricted. Accordingly, it is desirable to arrange that some stations may only be opened by authorised personnel.

In accordance with the present invention there is provided a send/receive station for a pneumatic conveyor wherein the closure member of the station has associated therewith an electrically releasable latching mechanism, the closure member and the latching mechanism being so arranged that latching occurs automatically upon movement of the closure member to its closed position so locking the closure member in the closed position, and release of the latch can only be effected by applying an appropriate electrical signal thereto. Preferably the latching mechanism is operable from the control system of the conveyor and the control system will operate the latching mechanism to release the closure member only upon receipt of a predetermined input. Alternatively the release control means is specific to the station. Preferably said predetermined input is a sequence of key strokes knowledge of which can be restricted to authorised personnel. Alternatively said input may be a code read from a magnetic card or other similar device issue of which is restricted to authorised personnel.

The closure member may comprise a sleeve, preferably a slidable sleeve, or alternatively may comprise a hinged door.

Preferably, the latching mechanism comprises a bolt engageable with the closure member. At least one of the bolt and the closure member is preferably provided with a ramped surface arranged to move the bolt to permit closing of the closure member.

The bolt may be arranged to engage in a recess provided in the closure member, or alternatively with a projection provided on the closure member in order to latch the closure member in its closed position.

The station conveniently further comprises a cover arranged to restrict access to the bolt.

One example of the invention is illustrated in the accompanying drawings, wherein:-
Figure 1 is a diagrammatic representation of a send/receive station for a pneumatic conveyor,
Figure 2 is a diagrammatic exploded, partly sectional view of part of the arrangement of the station of Figure 1,
Figures 3 and 4 are diagrammatic representations of the operation of the latch mechanism of Figure 2, and
Figure 5 is a view similar to Figures 3 and 4 of a modification.

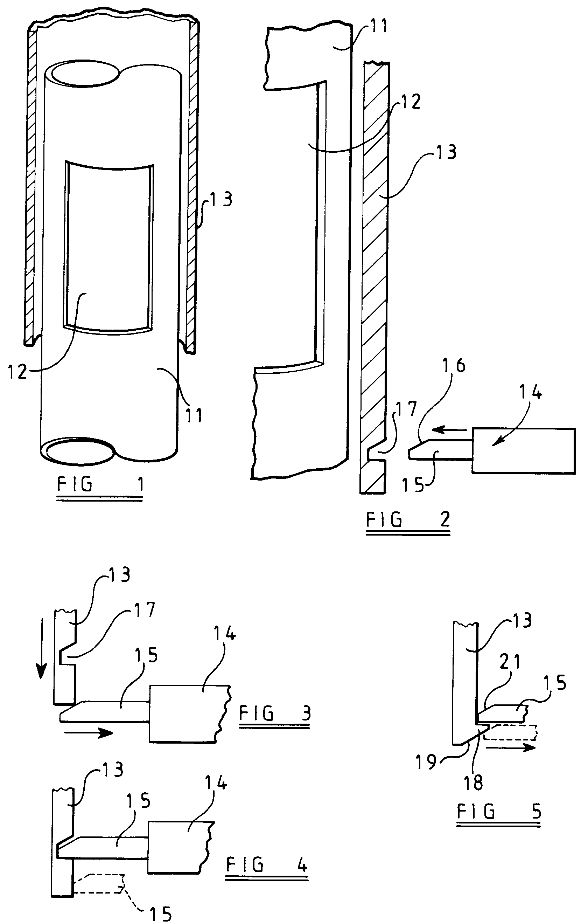

Referring to the drawings the station illustrated in Figure 1 is a very simple station in which a tube 11 formed from synthetic resin material is coupled into a tube network along which carriers can be conveyed between various stations. The tube 11 has an aperture 12 through which a carrier can be introduced into or retrieved from the tube 11 and a sleeve 13 also formed from synthetic resin material is slidable on the tube 11 in the region of the aperture 12 between an open position in which access can be gained to the interior of the tube 11 through the aperture 12, and a closed position in which the sleeve 13 closes the aperture 12. At its opposite ends the sleeve 13 is provided internally with sliding seals which engage the outer surface of the tube 11 so that when the sleeve 13 is in its closed position the seals at opposite ends of the tube lie on opposite sides respectively of the aperture 12. Sensors may be provided for detecting when the sleeve 13 is in its closed position, the sensors applying appropriate signals to the control computer of the conveyor to effect initiation of an air flow through the tube 12 to convey a carrier to or from the station. It will be appreciated that the foregoing is an extremely simplistic description of a pneumatic conveyor system, but it is sufficient for an understanding of the present invention. Details of conveyor systems will be well known to experts in the field.

In order that the sleeve 13 can be locked in its closed position there is provided a solenoid operated latch 14 (Figure 2). The latch 14 includes a latch bolt 15 spring urged to an outward position in which it projects to its fullest extent from the housing of the latch 14. The bolt 15 can be withdrawn against the spring action by electrically energising the solenoid of the latch 14.

In the embodiment illustrated in Figures 2, 3 and 4 the latch bolt 15 has, adjacent its outer end, an inclined ramp surface 16 presented upwardly. In the de-energised condition of the latch 14 the bolt 15 projects into the path of movement of the sleeve 13 and, as shown in Figure 3, as the sleeve 13 is moved downwardly towards its closed position the lower axial end of the sleeve 13 will contact the ramp surface 16 of the bolt 15 such that continued downward movement of the sleeve 13 displaces the bolt 15 against the spring action. Adjacent its lower end the sleeve 13 is formed with a recess 17 for receiving the outer end of the bolt 15, and after displacement of the bolt 15 against the spring action the outer end of the bolt 15 slides on the outer surface of the sleeve 13 (illustrated diagrammatically in broken lines in Figure 4), until the sleeve 13 has moved sufficiently far transversely relative to the bolt 15 that the recess 17 aligns with the bolt 15. The position of the sleeve 13 at which the bolt 15 and recess 17 are aligned is the closed position of the sleeve 13, and under the aforementioned spring action the bolt 15 is driven outwardly to lie within the recess 17. It can be seen from the drawings that the lower wall of the recess 17, and the corresponding lower face of the bolt 15, extend transverse to the direction of movement of the sleeve 13, and thus engagement of the bolt 15 in the recess 17 locks the sleeve 13 against movement from its closed position towards its open position. Because the coacting surfaces of the recess 17 and bolt 15 are transverse to the direction of movement of the sleeve 13 there is no ramp action equivalent to the action which displaces the bolt 15 against its spring bias during closure of the sleeve 13.

Figure 5 illustrates a modification of the arrangement shown in Figures 2, 3 and 4, in that rather than the sleeve 13 being formed with a recess 17 it has, instead, an outward projection 18 defining a shoulder extending at right angles to the direction of movement of the sleeve. The lower face of the shoulder, and if necessary part of the end face of the sleeve 13 is chamfered at 19 and a corresponding chamfer 21 is provided on the upper edge of the bolt 15. Thus, as indicated in broken lines in Figure 5, during closing movement of the sleeve 13 the surfaces 19 and 21 coact to displace the bolt 15 against spring action, but when the sleeve 13 reaches its closed position the bolt 15 is pushed outwardly by spring action to lie over the right angle shoulder defined by the projection 18 and so lock the sleeve 13 in its closed position.

It will be recognised that the sleeve 13 can be released by energising the solenoid of the latch 14 so as to withdraw the bolt 15 against the spring action, to lie clear of the recess 17 or projection 18. In its simplest aspect control over energisation of the solenoid latch 14 could be effected at the station itself by means of a secure switch mechanism operable only by an authorised user. However, it is usually more convenient for control over the latch mechanism to be effected by way of the central control mechanism of the conveyor system. The conveyor system will almost certainly include a computer control arrangement, and the control mechanism can thus have control over energisation of the solenoid of the latch 14. Thus at the station there may be a keypad, which could be an existing keypad provided for other control functions, or a specific keypad, or alternatively there could be some other means for inputting a coded signal such as a magnetic card reader. Whatever the input mechanism the control code will be known or held only by authorised users and upon receipt of an appropriate signal the central control mechanism of the conveyor system, or, in the event that it is chosen to effect locking control at the station itself, the control system of the station,will effect release of the latch 14.

It is to be understood that in a practical arrangement the latch mechanism 14 will be disposed beneath a cover or casing into which the lower end of the sleeve 13 extends, so that unauthorised access to the latch bolt 15 is prevented.

It will be recognised that a similar locking arrangement can be applied to other forms of send and receive station, and for example where the send and receive station includes a cabinet with a hinged door fulfilling the function of the sleeve 13 then a similar solenoid operated latch mechanism may be used to lock the door in its closed position on the cabinet. Similarly with appropriate modification the principle can be applied to other forms of send and receive station closure member.

## Claims

1. A send/receive station for a pneumatic conveyor characterized in that the closure member (13) of the station has associated therewith an electrically releasable latching mechanism (14), the closure member (13) and the latching mechanism (14) being so arranged that latching occurs automatically upon movement of the closure member (13) to its closed position so locking the closure member (13) in the closed position, and release of the latching mechanism (14) can only be effected by applying an appropriate electrical signal thereto.

2. A station as claimed in Claim 1, characterized in that the latching mechanism (14) is operable from the control system of the conveyor and the control system will operate the latching mechanism (14) to release the closure member (13) only upon receipt of a predetermined input.

3. A station as claimed in Claim 1, characterized in that the latching mechanism (14) is operable by control means specific to the station and said control means will operate the latching mechanism (14) to release the closure member (13) only upon receipt of a predetermined input.

4. A station as claimed in Claim 2 or Claim 3, characterized in that said predetermined input is a sequence of key strokes.

5. A station as claimed in Claim 2 or Claim 3, characterized in that said input comprises a code to be read from a magnetic card.

6. A station as claimed in any one of the preceding claims, characterized in that the closure member (13) comprises a sleeve.

7. A station as claimed in Claim 6, characterized in that the sleeve is slidable.

8. A station as claimed in any one of Claims 1 to 5, characterized in that the closure member (13) comprises a hinged door.

9. A station as claimed in any one of the preceding claims, characterized in that the latching mechanism (14) comprises a bolt (15) engageable with the closure member (13).

10. A station as claimed in Claim 9, characterized in that at least one of the closure member (13) and the bolt (15) is provided with a ramped surface (16, 19, 21) arranged to move the bolt (15) to permit closing of the closure member (13).

11. A station as claimed in Claim 9 or Claim 10, characterized in that the closure member (13) is provided with a recess (17) in which the bolt (15) is engageable to latch the closure member (13) in its closed position.

12. A station as claimed in Claim 9 or Claim 10, characterized in that the closure member (13) is provided with a projection (18) with which the bolt (15) is engageable to latch the closure member (13) in its closed position.

13. A station as claimed in any one of Claims 9 to 12, characterized by a cover restricting access to the bolt (15).
